# FASCICULE DE BREVET EUROPEEN

(11) **EP 1 361 179 B1**
(45) Date de publication et mention de la délivrance du brevet: **12.10.2005**
(21) Numéro de dépôt: 03290717.2
(22) Date de dépôt: 21.03.2003
(51) Int. Cl.: B65G 1/137

(54) **Automate de stockage, de délivrance et de transport de produits**
Automat zum Lagern, Ausliefern und Zuführen von Produkten
Automat for storing, delivering and conveying products

(30) Priorité: 21.03.2002 FR 0203511
(43) Date de publication de la demande: 12.11.2003
(73) Titulaire: ARX, 75003 Paris 3ème (FR)
(72) Inventeur: Connier, Jean-Louis, 72200 La Flèche (FR)
(74) Mandataire: Kohn, Philippe

(56) Documents cités:
- EP-A- 0 183 074
- EP-A- 0 870 704
- FR-A- 2 228 010
- FR-A- 2 696 722
- US-A- 2 868 344

## Description

L'invention concerne un automate de stockage et de transport de produits.

L'invention concerne plus particulièrement un automate de stockage et de transport de produits, du type qui comporte au moins un rack de stockage comportant une pluralité de canaux modulaires, qui sont destinés à recevoir les produits à stocker, qui sont inclinés vers le sol entre une face arrière et une face libre avant du rack dans lesquelles ils débouchent respectivement par une entrée et une sortie, et qui sont équipés de moyens d'immobilisation/libération qui sont susceptibles d'immobiliser les produits et/ou de leur permettre de glisser le long des canaux puis de choir du rack pour tomber sur un convoyeur qui est destiné à acheminer les produits vers un poste de récupération.

On connaît de nombreux exemples d'automates de ce type.

Des automates conventionnels de ce type sont par exemple utilisés dans le commerce pharmaceutique et ils comportent généralement des racks de stockage dont les faces libre avant sont agencées en vis-à-vis de part et d'autre d'un convoyeur central. Des gouttières inclinées, formant les canaux de stockage des produits, comportent à leur extrémités des volets d'obturation qui sont susceptibles d'être ouverts pour laisser choir des médicaments sur le convoyeur central, lesquels médicaments sont ensuite acheminés par le convoyeur central vers un poste de réception d'où ils peuvent être commercialisés.

Ces automates comportent plusieurs types d'inconvénients.

En premier lieu, les volets d'obturation des canaux nécessitent un câblage de commande complexe qui rend l'installation d'un tel automate sur un site particulièrement délicate.

En deuxième lieu, un automate comportant un convoyeur agencé en position centrale soulève des difficultés particulières, pouvant amener le concepteur à envisager deux conceptions de l'automate présentant chacune des inconvénients qui lui sont propres.

Selon une première conception, l'automate est conçu de manière à comporter un convoyeur renforcé qui est apte à supporter le poids d'une personne de taille adulte, pour faciliter les opérations de maintenance par un technicien circulant sur le convoyeur. L'inconvénient de cette conception est qu'un tel convoyeur renforcé est encombrant et coûteux.

Selon une seconde conception, l'automate est conçu de manière à comporter un convoyeur adapté au seul transport des produits, mais il ne peut alors supporter le poids d'une personne de taille adulte et rend alors l'intervention d'un technicien malaisée.

En troisième et dernier lieu, un inconvénient majeur inhérent à un automate conventionnel est sa sensibilité élevée aux pannes du convoyeur. En effet, l'ensemble de l'automate se révèle inapte à distribuer les produits si le convoyeur central tombe en panne.

Pour remédier aux inconvénients mentionnés précédemment de manière simple et efficace, l'invention propose une conception modulaire de l'automate qui en facilite les opérations de maintenance et permet à l'automate de fonctionner en dépit d'une panne partielle du convoyeur.

Dans ce but, l'invention propose un automate du type décrit précédemment, caractérisé en ce qu'au moins un module d'acheminement horizontal du convoyeur est agencé sous les canaux dans la base du rack et en ce que le rack comporte, à proximité de sa face libre avant, une plaque de guidage qui est inclinée vers la base du rack et qui est destinée à guider les produits dans leur chute vers ledit module d'acheminement horizontal du convoyeur.

Selon d'autres caractéristiques de l'invention :
- le rack comporte une structure tubulaire sensiblement parallélépipédique délimitée par des montants verticaux, une partie supérieure du rack comporte au moins des barres transversales de maintien des canaux modulaires qui sont agencées entre les montants verticaux des faces arrière et avant du rack, et une partie inférieure du rack comporte un tapis roulant formant le module d'acheminement horizontal du convoyeur dont des rouleaux sont agencés entre les montants avant et arrière deux à deux opposés,
- chaque canal comporte :
   - une gouttière supérieure, qui comporte au moins deux ailes verticales d'écartement réglable destinées à s'adapter à différentes tailles de produits,
   - une platine inférieure, comportant les moyens d'immobilisation/libération,
- les moyens d'immobilisation/libération comportent :
   - un moyen d'obstacle, qui fait saillie dans la gouttière supérieure à proximité de la sortie du canal et qui est destiné à s'opposer à la descente des produits,
   - un doigt commandé, qui est susceptible de faire saillie au travers d'une ouverture d'une première plaque formant fond de gouttière portée par la platine inférieure, qui est agencée immédiatement en amont du moyen d'obstacle, pour soulever le produit et lui permettre de franchir le moyen d'obstacle,
- un mécanisme d'actionnement du doigt commandé est porté par une deuxième plaque qui est portée par la platine inférieure et qui est agencée sous la première plaque, et le mécanisme comporte :
   - un bras inférieur, qui traverse la deuxième plaque, qui est articulé à rotation en son milieu sur la deuxième plaque autour d'un axe transversal, et dont l'extrémité inférieure est reliée, d'un côté opposé à la sortie du canal, à un élément de traction longitudinale commandé et, du côté de la sortie du canal, à un ressort de rappel fixé à la deuxième plaque,
   - un bras supérieur, dont l'extrémité supérieure comporte le doigt, qui est articulé en rotation sensiblement en son milieu à l'extrémité supérieure du bras inférieur, et qui est rappelé élastiquement vers le bras inférieur par un ressort de torsion pour permettre à son extrémité inférieure de prendre appui sur le bras inférieur lorsque l'extrémité inférieure du bras inférieur est tirée par l'élément de traction longitudinale à l'opposé de la sortie du canal de manière que le doigt fasse saille hors de l'ouverture de la première plaque et soulève un produit en amont des moyens d'obstacle, ou bien pour permettre au bras supérieur de pivoter par rapport au bras inférieur lorsque l'extrémité inférieure du bras inférieur est rappelée par le ressort vers la sortie du canal de manière que le doigt s'escamote sous le produit suivant,
- la platine est réalisée sous la forme d'un profilé longitudinal présentant sensiblement une section en forme de H dont des bords latéraux comportent intérieurement des rainures longitudinales supérieure et inférieure de réception des première et deuxième plaques, et dont une paroi de branche horizontale, agencée verticalement entre les rainures supérieure et inférieure, comporte deux rainures longitudinales symétriques destinées à permettre la flexion de paroi de branche horizontale du profilé pour écarter ses bords latéraux et faciliter l'introduction des première et deuxième plaques,
- les rainures longitudinales de la paroi de branche horizontale du profilé sont destinées à former des glissières pour deux branches longitudinales d'un poussoir dont une extrémité libre fait saillie à l'avant du canal et dont une extrémité d'actionnement recourbée traverse l'ouverture du profilé correspondant à l'ouverture de la première plaque et est agencée en regard de l'extrémité inférieure du bras inférieur pour permettre de le faire basculer manuellement, les branches longitudinales du poussoir étant maintenues dans les glissières par au moins deux tiges qui traversent transversalement le profilé et qui plaquent lesdites branches longitudinales dans les rainures longitudinales,
- les moyens d'obstacles comportent des crochets dont des extrémités supérieures font saillie dans la gouttière et dont des extrémités inférieures sont fixées dans des rainures verticales des bords latéraux du profilé,
- l'élément de traction longitudinale commandé est constitué d'un fil thermorétractable dont une extrémité est attachée à la deuxième plaque, dont l'extrémité opposée est attachée à l'extrémité inférieure du bras inférieur, et qui est susceptible de se raccourcir lorsqu'il est parcouru par un courant électrique dont l'établissement est commandé des moyens électroniques agencés sur la deuxième plaque,
- les moyens électroniques comportent au moins un capteur de présence de produit agencé en amont des moyen d'obstacle, un capteur d'entrée de produit agencé en amont du canal, un capteur de sortie du produit agencé en aval du canal, et les capteurs d'entrée et de sortie sont reliés à un dispositif de comptage par différence destiné à déterminer le stock de produits présents dans le canal,
- le profilé comporte une paire avant d'encoches en forme de U inversé pour permettre la fixation du profilé sur les barres transversales avant de maintien du rack et comporte une paire arrière d'encoches en forme de U couché pour permettre la fixation du profilé sur les barres transversales arrière de maintien du rack,
- la deuxième plaque comporte une pince d'alimentation électrique, alignée transversalement avec la paire avant d'encoches, qui est destinée à s'emboîter sur la barre avant transversale du rack qui est réalisée en un matériau conducteur métallique, pour permettre l'alimentation électrique des moyens électroniques,
- la gouttière comporte deux profilés en vis à vis présentant chacun en section la forme d'un L de concavité tourné vers l'axe médian de la gouttière, les branches verticales des profilés formant les ailes de la gouttière, et chaque branche horizontale d'un profilé étant articulée sur la première plaque par l'intermédiaire d'une structure de parallélogramme horizontale déformable, et les mouvements de deux structures de parallélogramme horizontales déformables opposées sont synchronisées pour permettre un écartement simultané des ailes de la gouttière symétriquement par rapport à l'axe médian de la gouttière,
- au moins un montant vertical de la partie inférieure du rack porte un support vertical en forme de plaque sur lequel est fixé un moteur dont un axe porteur d'un premier galet, traversant la plaque, entraîne un deuxième galet qui est monté à rotation sur la plaque et qui est en appui sur le tapis roulant assurer son entraînement,
- le support vertical en forme de plaque est fixé au montant par l'intermédiaire d'une goupille qui traverse la plaque et le montant vertical, dont une extrémité tournée vers l'intérieur du rack porte un loquet pivotant d'axe transversal escamotable dans une rainure de la goupille, et dont l'extrémité opposée porte une came pivotante d'axe transversal qui est susceptible de prendre appui sur le montant vertical pour arc-bouter le loquet sur le support en forme de plaque et assurer ainsi le serrage du support sur le montant,
- le convoyeur comporte au moins un module d'ascension, de structure tubulaire sensiblement parallélépipédique compatible avec un rack de stockage, qui comporte deux tapis roulants superposés inclinés dont les rouleaux superposés tournent en sens inverse l'un de l'autre, le tapis roulant inférieur comportant à intervalles réguliers des bandes de tissu adhérent d'orientation parallèle au rouleaux et le tapis roulant supérieur comportant des volets de tissu qui pendent au contact du tapis roulant inférieur pour entraîner les produits entre les deux tapis roulants,
- les volets de tissu sont cousus sur le tapis roulant supérieur sensiblement sous la forme d'aubes,
- le convoyeur comporte au moins deux modules amont et aval d'articulation, de structure tubulaire sensiblement parallélépipédique compatible avec un rack de stockage, qui forment un angle déterminé et sont jointifs par un montant vertical commun, et le module amont comporte un tapis roulant horizontal amont motorisé dont l'extrémité de jonction surplombe l'extrémité de jonction d'un tapis roulant aval motorisé du module aval qui est incliné de manière que son extrémité opposée soit sensiblement au niveau du tapis roulant amont,
- le convoyeur comporte au moins deux modules amont et aval d'embranchement, de structure tubulaire sensiblement parallélépipédique compatible avec un rack de stockage, le module amont comportant un tapis roulant motorisé débouchant sensiblement perpendiculairement au milieu d'un tapis roulant motorisé du module aval qui est susceptible d'orienter sélectivement les produits dans deux directions opposées,
- les moyens électroniques des canaux, les moteurs des tapis roulants de chaque module d'ascension, d'articulation, et d'embranchement sont commandés par des moyens de réception infrarouge en réponse à des ordres émis par des moyens d'émission infrarouge commandés par une unité centrale de gestion de l'automate.

D'autres caractéristiques et avantages de l'invention apparaîtront à la lecture de la description détaillée qui suit pour la compréhension de laquelle on se reportera aux dessins annexés dans lesquels :
- la figure 1 est une vue d'ensemble en perspective d'un automate selon l'invention ;
- la figure 2 est une vue en perspective d'une partie supérieure d'un rack selon l'invention ;
- la figure 3 est une vue en perspective éclatée d'un canal pour un rack selon l'invention ;
- la figure 4 est une vue de détail du doigt porté par les bras supérieur et inférieur d'un canal réalisé conformément à l'invention ;
- les figures 5 à 8 sont des vues schématiques de côté illustrant le fonctionnement du mécanisme d'actionnement du doigt commandé au cours de la libération d'un produit ;
- la figure 9 est une vue de détail d'un rack selon l'invention,
- la figure 10 est une vue de détail d'un module d'ascension,
- la figure 11 est une vue de dessous de la deuxième plaque portant les moyens d'immobilisation et de libération,
- la figure 12 est une vue de dessus des moyens d'entraînement du tapis du rack.

Dans la description qui va suivre, des chiffres de référence identiques désignent des pièces identiques ou ayant des fonctions similaires.

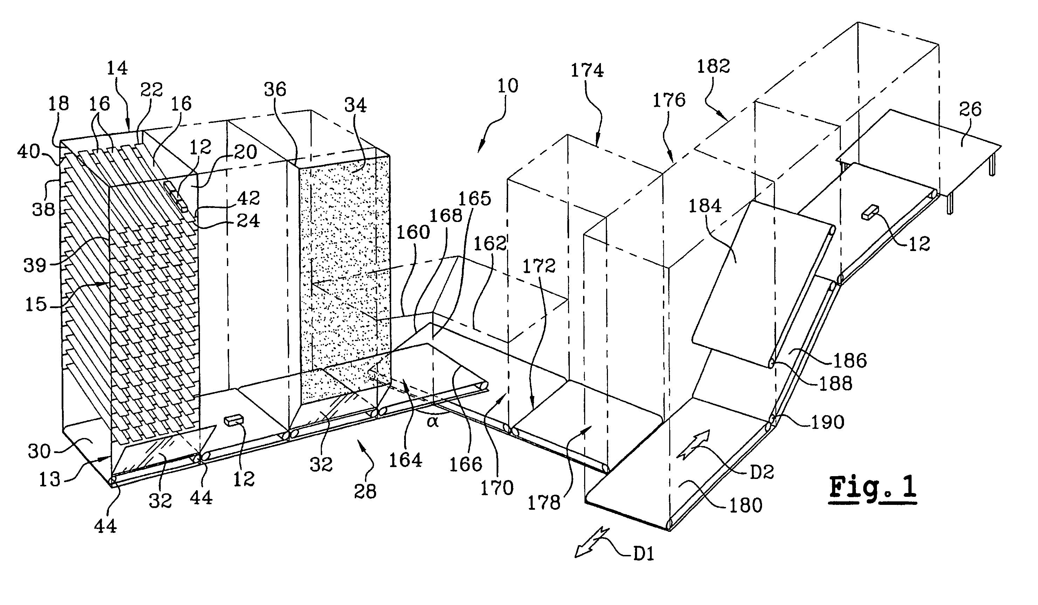

On a représenté à la figure 1 l'ensemble d'un automate 10 de stockage et de transport de produits 12, par exemple des produits 12 médicamenteux qui sont destinés à être stockés et distribués à l'intérieur d'une officine de pharmacie. Cet usage n'est pas limitatif de l'invention, et l'automate 10 peut être utilisé pour le stockage et le transport de tout autre type de produit.

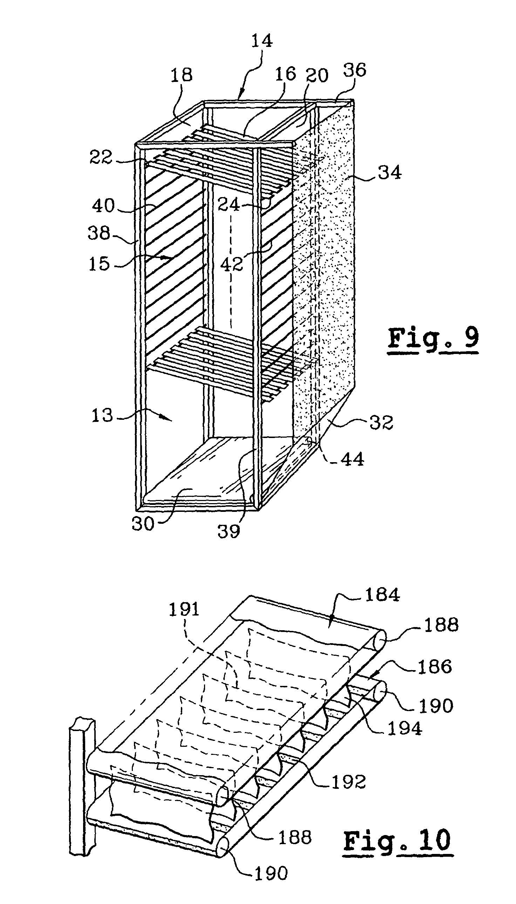

De manière connue, l'automate 10 qui comporte au moins un rack 14 de stockage qui, comme l'illustre la figure 9, comporte une pluralité de canaux 16 modulaires qui sont destinés à recevoir les produits 12 à stocker. Les canaux 16 sont inclinés vers le sol entre une face arrière 18 et une face libre avant 20 dans lesquelles ils débouchent respectivement par une entrée 22 et une sortie 24.

De manière connue, les canaux 16 sont équipés de moyens d'immobilisation/libération, qui seront décrits plus en détail dans la suite de la présente description, et qui sont susceptibles d'immobiliser les produits 12 et/ou de leur permettre de glisser le long des canaux 16 puis de choir du rack 14 pour tomber sur un convoyeur 28 qui est destiné à acheminer les produits 12 vers un poste 26 de récupération, représenté à la figure 1, par exemple un comptoir de l'officine pharmaceutique précédemment mentionnée.

Conformément à l'invention, au moins un module 30 d'acheminement horizontal du convoyeur 28 est agencé sous les canaux 16 dans la base 13 du rack 14 et le rack comporte, à proximité de sa face libre avant 20, une plaque 32 de guidage qui est inclinée vers la base du rack et qui est destinée à guider les produits 12 dans leur chute vers ledit module 30 d'acheminement horizontal du convoyeur 28.

Les produits 12 sont ainsi susceptibles de choir contre la paroi de la plaque 32 qui est tournée vers le rack 14 pour glisser ensuite vers le module 30 d'acheminement du convoyeur 28.

Avantageusement, le rack comporte aussi un rideau 34, qui est tendu devant la face libre avant 20 entre des potences 36 et la plaque 32 de guidage pour guider les produits 12 vers la plaque 32 de guidage suivant toute la hauteur de leur chute.

Conformément à l'invention, le rack 14 comporte une structure tubulaire sensiblement parallélépipédique délimitée par des montants verticaux arrière 38 et avant 39. Une partie supérieure 15 du rack 14 comporte au moins des barres 40, 42 transversales arrière et avant de maintien des canaux 16 modulaires qui sont agencées entre les montants verticaux 38, 39 respectifs des faces arrière 18 et avant 20 du rack 14.

Une partie inférieure 13 formant la base du rack 14 comporte un tapis roulant formant le module 30 d'acheminement horizontal du convoyeur 28 dont des rouleaux 44 sont agencés entre les montants avant 39 et arrière 38 deux à deux opposés.

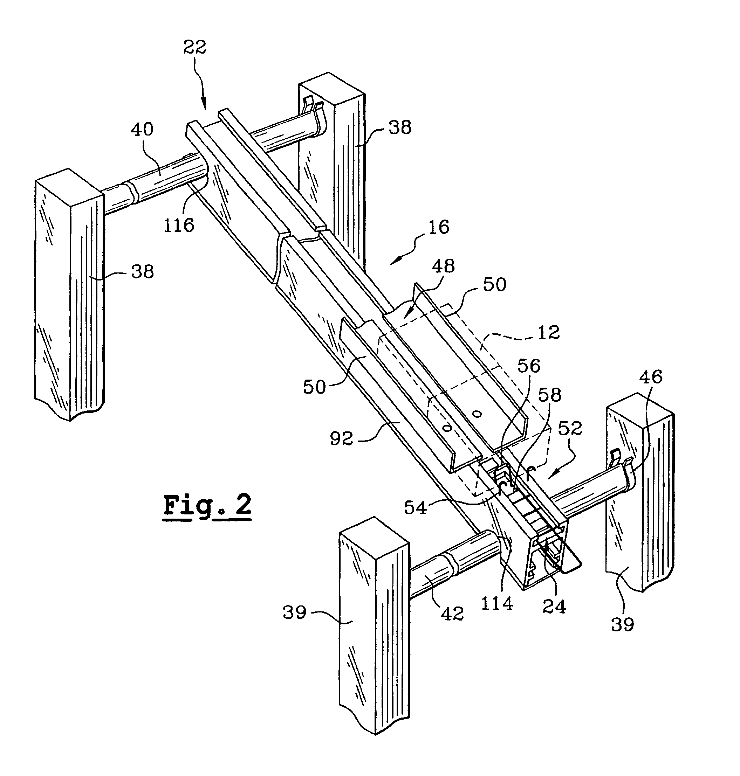

Comme l'illustre la figure 2, les barres 40, 42 sont fixées sur les montants verticaux 38, 39 par l'intermédiaire de moyens de fixation 46, qui sont réalisés, à titre d'exemple et de manière non limitative de l'invention, sous la forme d'oeillets.

Avantageusement, les moyens de fixation 46 sont démontables et répartis verticalement de manière régulière, de manière à permettre de démonter certaines barres 40, 42 pour que deux canaux 16 verticalement consécutifs soient plus ou moins espacés, ce qui permet d'adapter la configuration du rack 14 à des hauteurs de produits 12 différentes.

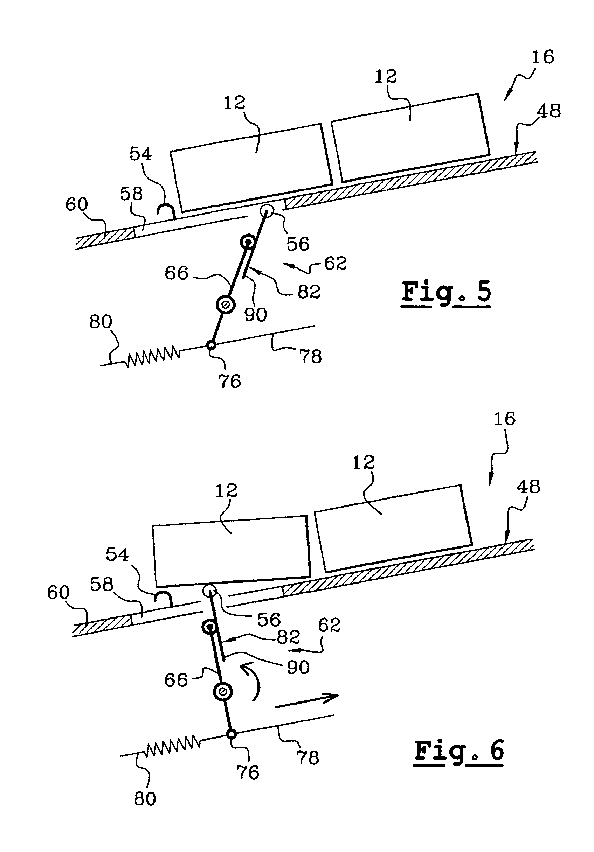

Le détail de la configuration des canaux 16 a été représenté aux figures 2 à 4 et le détail de leur fonctionnement a été représenté aux figures 5 à 8.

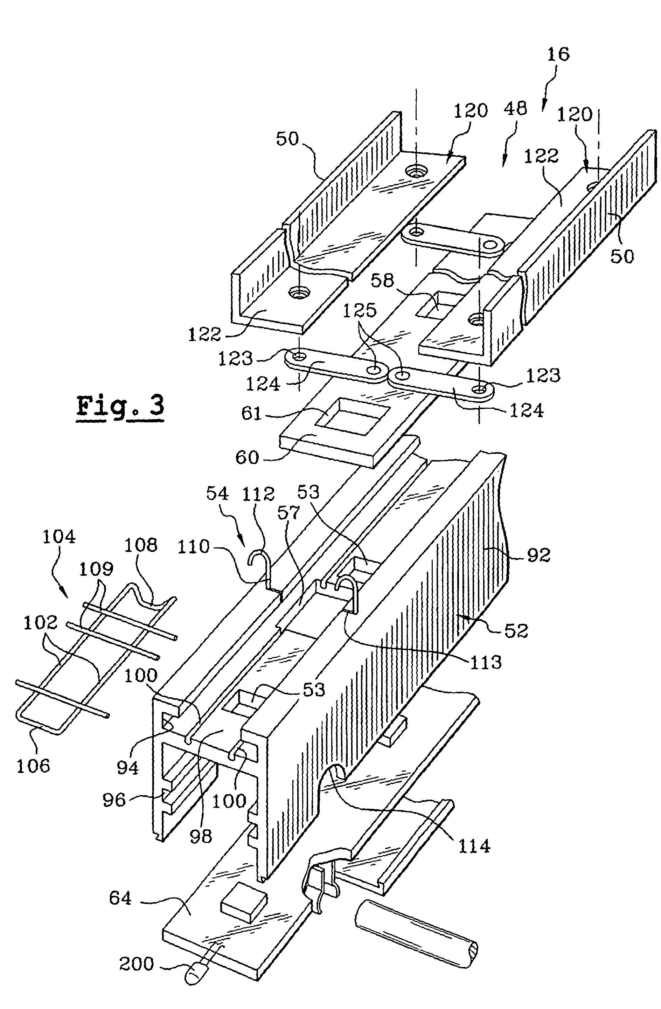

Comme l'illustrent les figures 2 et 3, chaque canal 16 comporte une gouttière supérieure 48, qui comporte au moins deux ailes 50 verticales d'écartement réglable destinées à s'adapter à différentes tailles de produits 12, et une platine inférieure 52, comportant les moyens d'immobilisation/libération.

Plus particulièrement, les moyens d'immobilisation et de libération comportent un moyen d'obstacle 54, qui fait saillie dans la gouttière 48 supérieure à proximité de la sortie 24 du canal 16 et qui est destiné à s'opposer à la descente des produits 12, et un doigt commandé 56 représenté à la figure 2, qui, comme l'illustre la figure 3, est susceptible de faire saillie au travers d'une ouverture 58 d'une première plaque 60 qui forme le fond de la gouttière 48 et qui est portée par la platine inférieure 52.

L'ouverture 58 est agencée immédiatement en amont du moyen d'obstacle 54, de manière que le doigt 56 puisse soulever le produit 12 et lui permettre ainsi de franchir le moyen d'obstacle 54.

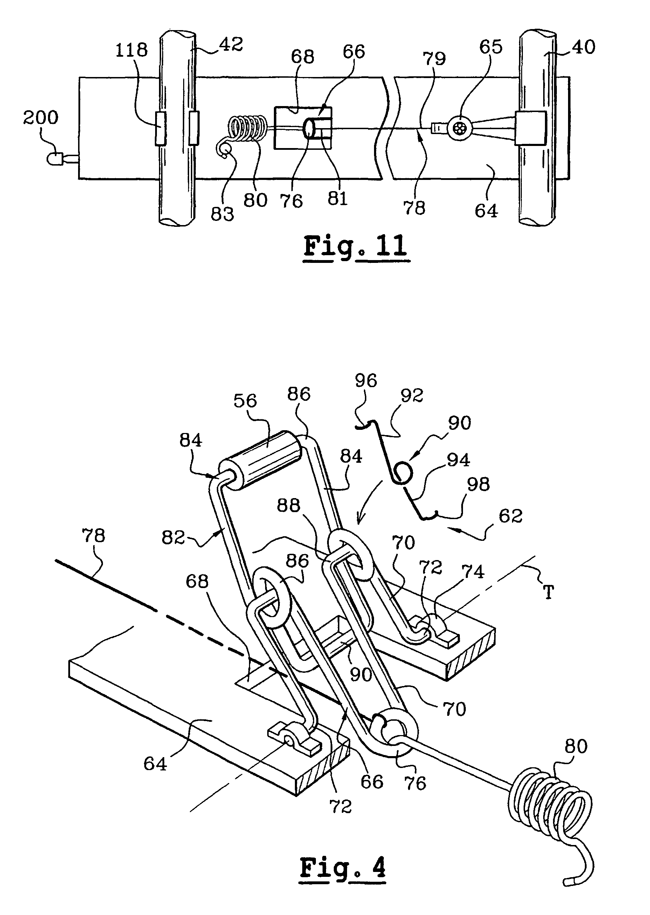

Un mécanisme d'actionnement 62 du doigt commandé 56 a été représenté plus particulièrement à la figure 4. Ce mécanisme 62 est porté par une deuxième plaque 64 qui, comme l'illustre la figure 3, est portée par la platine inférieure 52 et est agencée sous la première plaque 60.

Le mécanisme 62 d'actionnement comporte un bras inférieur 66, qui traverse une ouverture 68 de la deuxième plaque 64. Dans le mode de réalisation préféré de l'invention, le bras inférieur 66 est réalisé en fil d'acier, sensiblement en forme de "M", et il comporte des branches 70 verticales parallèles qui sont symétriques par rapport au plan médian longitudinal (non représenté) du canal 16, mais cette disposition n'est pas limitative de l'invention.

Ce bras inférieur 66 est articulé à rotation en son milieu 72 sur la deuxième plaque 64 autour d'un axe transversal "T". Par exemple, les extrémités des branches 70 sont reçues dans des cavaliers 72 fixés à la plaque 64.

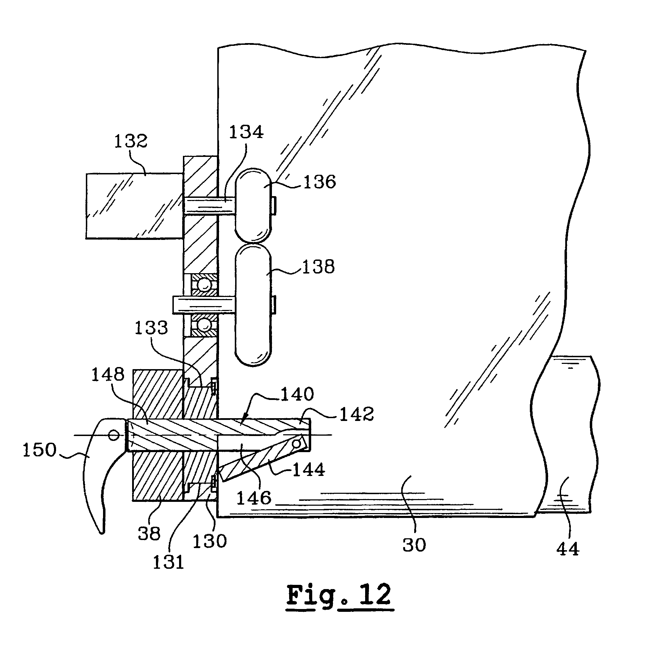

Comme l'illustrent les figures 4 et 11, l'extrémité inférieure 76 du bras 66 est conformée sensiblement en anneau et elle est reliée, d'un côté opposé à la sortie du canal, à un élément 78 de traction longitudinale commandé et, du côté de la sortie du canal, à un ressort 80 de rappel qui est fixé à un pion 83 solidaire de la deuxième plaque 64.

Comme l'illustre la figure 4, le mécanisme d'actionnement 62 comporte aussi un bras supérieur 82, dont l'extrémité supérieure 84 comporte le doigt 56. Par exemple, le bras supérieur 82 est lui aussi réalisé en fil d'acier et il comporte des branches 84 verticales parallèles qui sont symétriques par rapport au plan médian du canal 16 et qui sont réunies par une branche transversale 86 qui forme l'extrémité supérieure 84 et qui reçoit un rouleau formant le doigt 56. Le rouleau formant le doigt 56 peut être avantageusement réalisé en un matériau présentant un coefficient de friction élevé, pour permette un entraînement optimal du produit 12.

Le bras supérieur 82 est articulé en rotation sensiblement en son milieu 86 à l'extrémité supérieure 88 du bras inférieur 66. Par exemple, les branches 84 du bras supérieur 82 sont enroulées sur elles-mêmes de manière à constituer des anneaux qui sont traversés par des branches transversales alignées formant l'extrémité supérieure du bras inférieur 66.

Le bras supérieur 82 est rappelé élastiquement vers le bras inférieur 66 par un ressort de torsion 90 dont le rôle sera décrit ultérieurement dans la suite de la présente description. Le ressort 90 est notamment enroulé sur une branche transversale du bras inférieur 66 et il comporte deux brins 92, 94 qui sont respectivement fixés par des crochets 96, 98 aux branches verticales 84 et 70 des bras supérieur 82 et inférieur 66.

Dans cette configuration, le mécanisme d'actionnement 62 est susceptible de fonctionner comme illustré aux figures 5 à 8 pour permettre au produits 12 de franchir le moyen d'obstacle 54.

Dans une configuration de repos du mécanisme d'actionnement 62 qui a été représentée à la figure 5, les produits 12 sont reçus dans la gouttière 48 et sont arrêtés par le moyen d'obstacle 54. Les deux bras inférieur 66 et supérieur 82 sont agencés dans une position verticale inclinée telle que le doigt 56 est agencé sous le produit 12 qui est immédiatement en amont de l'ouverture 58 et du moyen d'obstacle 54.

Lorsque le mécanisme d'actionnement 62 est actionné comme illustré à la figure 6, l'extrémité inférieure 76 du bras inférieur 66 est tirée par l'élément 78 de traction longitudinale à l'opposé de la sortie du canal 16 et une extrémité inférieure 90 du bras supérieur 82 prend appui sur le bras inférieur 66. Le pivotement du bras inférieur 66, représenté par la flèche de la figure 6, provoque le pivotement du bras supérieur 82 et de ce fait le doigt 56 fait saille hors de l'ouverture 58 de la première plaque 60 et soulève le produit 12 qui est agencé en amont du moyen 54 d'obstacle.

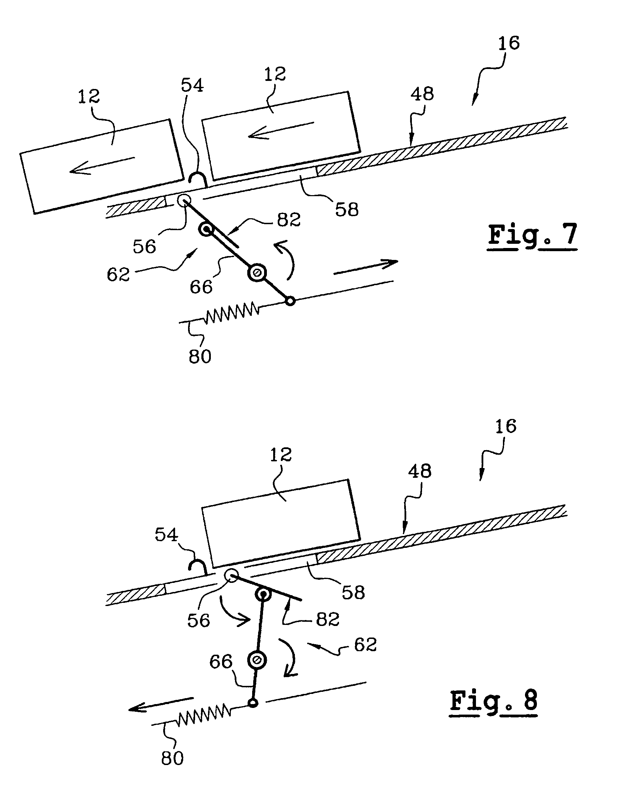

De la sorte, comme l'illustre la figure 7, le produit 12 ayant franchi le moyen d'obstacle 54, le produit 12 glisse dans la gouttière 48 vers la sortie du canal 16.

Puis, lorsque l'élément 78 de traction longitudinale est relâché et le bras inférieur 66 étant rappelé par le ressort 80 vers la sortie du canal comme représenté à la figure 8, le bras supérieur 82 pivote par rapport au bras inférieur 66 comme indiqué par la flèche de la figure 8 de manière que le doigt 56 s'escamote sous le produit 12 suivant.

Dans une phase finale (non représentée), le ressort 90 précédemment décrit rappelle le bras supérieur 82 dans la position initiale de la figure 5.

Comme l'illustre la figure 11, l'élément 78 de traction longitudinale commandé est préférentiellement constitué d'un fil thermorétractable dont une extrémité 79 est attachée à la deuxième plaque 64, par exemple par l'intermédiaire d'une cosse 65 à laquelle il est soudé. L'extrémité opposée 81 du fil 78 est attachée à l'extrémité inférieure 76 du bras inférieur, et le fil 78 est susceptible de se raccourcir lorsqu'il est parcouru par un courant électrique dont l'établissement est commandé des moyens électroniques agencés sur la deuxième plaque 64.

Cette disposition n'est toutefois pas limitative de l'invention et tout élément 78 de traction longitudinale commandé, tel qu'un électroaimant, pourrait convenir à la bonne réalisation de l'invention.

Les moyens électroniques comportent notamment au moins un capteur (non représenté) de présence de produit agencé en amont des moyen d'obstacle, un capteur d'entrée de produit agencé en amont du canal, un capteur de sortie du produit agencé en aval du canal, et les capteurs d'entrée et de sortie sont reliés à un dispositif (non représenté) de comptage par différence destiné à déterminer le stock de produits 12 présents dans le canal 16.

Dans le mode de réalisation préféré de l'invention, comme représenté aux figures 2 et 3, la platine 52 est réalisée sous la forme d'un profilé longitudinal présentant sensiblement une section en forme de "H" dont des bords latéraux 92 comportent intérieurement des rainures longitudinales supérieure 94 et inférieure 96 de réception des première et deuxième plaques 60, 64, et dont une paroi 98 de branche horizontale, agencée verticalement entre les rainures supérieure 94 et inférieure 96, comporte deux rainures 100 longitudinales symétriques destinées à permettre la flexion suivant une direction transversale au profilé 52 de ladite paroi 98 de branche horizontale du profilé 52 pour écarter ses bords latéraux 92 et faciliter l'introduction des première et deuxième plaques 60, 64.

Comme on peut le voir sur la figure 3, le profilé 52 comporte trois ouvertures du type des ouvertures 53 et la plaque supérieure 60 comporte trois ouvertures du type des ouvertures 61 qui sont destinées à permettre le passage des capteurs de présence, d'entrée et de sortie précédemment mentionnés qui sont réalisés par exemple sous la forme de cellules photoélectriques.

Avantageusement, les rainures 100 longitudinales de la paroi 98 de branche horizontale du profilé sont destinées à former des glissières pour deux branches 102 longitudinales d'un poussoir 104 dont une extrémité libre 106 fait saillie à l'avant du canal et dont une extrémité 108 d'actionnement recourbée traverse une ouverture 57 du profilé correspondant à l'ouverture 58 de la première plaque 60 et est agencée en regard de l'extrémité inférieure 76 du bras inférieur 66 pour permettre de le faire basculer manuellement. Les branches longitudinales 102 du poussoir 104 sont par exemple maintenues dans les glissières 100 par au moins deux tiges 109 qui traversent transversalement le profilé 52 et qui plaquent lesdites branches 102 longitudinales dans les rainures 100 longitudinales.

Le profilé 52 permet aussi une réalisation aisée du moyen d'obstacle 54. En effet, le moyen d'obstacle 54 comporte des crochets 110 dont des extrémités supérieures 112 font saillie dans la gouttière 48 et dont des extrémités inférieures sont fixées dans des rainures 113 transversales des bords latéraux 92 du profilé 52.

Avantageusement, comme l'illustrent les figures 2 et 3, le profilé 52 comporte une paire avant d'encoches 114 en forme de "U" inversé pour permettre la fixation du profilé sur les barres transversales avant 42 de maintien du rack et il comporte aussi une paire arrière d'encoches 116 en forme de U couché pour permettre la fixation du profilé sur les barres transversales arrière 40 de maintien du rack. De la sorte, la canal 16 peut être monté très facilement d'abord en l'emboîtant sur une barre arrière 40 puis en le laissant retomber sur une barre avant 42.

Par ailleurs, comme l'illustre la figure 11, la deuxième plaque 64 comporte sous sa face inférieure une pince 118 d'alimentation électrique, alignée transversalement avec la paire avant d'encoches 114, qui est destinée à s'emboîter sur la barre avant 42 transversale du rack qui est elle-même réalisée en un matériau conducteur métallique, pour permettre l'alimentation électrique des moyens électroniques précédemment décrits. Aucun raccordement électrique supplémentaire du canal 16 n'est donc nécessaire.

Le canal 16 est avantageusement adaptable à différentes tailles de produits 12. En effet, la gouttière 48 comporte deux profilés 120 agencés transversalement en vis à vis l'un de l'autre, qui présentent chacun en section la forme d'un "L" de concavité tournée vers l'axe médian de la gouttière 48. Les branches verticales des profilés 120 forment les ailes 50 de la gouttière 48, et chaque branche horizontale 122 d'un profilé est articulée sur la première plaque 60 par l'intermédiaire d'une structure de parallélogramme horizontale déformable. Par exemple, chaque structure de parallélogramme horizontale déformable comporte deux bielles parallèles 124 qui sont articulées en pivotement par des pivots 123, 125 à leurs deux extrémités respectivement sur le profilé 120 et sur la plaque supérieure 60. Chaque bielle 124 d'un profilé 122 est agencée symétriquement par rapport à la bielle 124 d'articulation du profilé 122 opposé et elle y est liée en rotation de sens contraire, par exemple par un dispositif d'accouplement (non représenté) tel qu'un engrenage de sorte que les mouvements de deux structures de parallélogramme horizontales déformables opposées sont synchronisées pour permettre un écartement simultané des ailes 50 de la gouttière 48 symétriquement par rapport à l'axe médian de la gouttière 48.

Les produits 12 qui ont été libérés du canal 16 et qui ont été orientés par la plaque inclinée 32 sont acheminés par le tapis roulant 30 de chaque rack 14. Avantageusement, les moyens d'entraînement de chaque tapis roulant 30 sont propres à chaque rack 14, de sorte que si un tapis roulant 30 tombe en panne, l'ensemble de l'automate n'est pas inactivé. En effet, il est possible de prévoir des moyens d'entraînement de chaque tapis roulant 30 qui l'entraînent à une vitesse suffisamment élevée pour que, si un tapis 30 vient à être défaillant, les produits traversent ledit tapis arrêté du seul fait de l'élan qui leur a été conféré par le tapis 30 précédent.

Comme l'illustre la figure 12, pour entraîner chaque tapis roulant 30, au moins un montant vertical 38 de la partie inférieure 13 du rack 14 porte un support vertical 130 en forme de plaque sur lequel est fixé un moteur 132 dont un axe 134 porteur d'un premier galet 136, traversant la plaque, entraîne un deuxième galet 138 qui est monté à rotation sur la plaque 130 et qui est en appui sur le tapis roulant 30.

Avantageusement les diamètres du premier galet 136 et du deuxième galet 130 peuvent être choisis de manière adéquate pour établir un rapport de réduction déterminé permettant d'adapter la vitesse de défilement du tapis roulant 30 à la vitesse de rotation du moteur 132.

Plus particulièrement, le deuxième galet 138 est agencé sensiblement au dessus du rouleau 44 du tapis 30, de sorte que le tapis est pincé entre le deuxième galet 138 et le rouleau 44, pour assurer un entraînement optimal et sans à-coups du tapis 30.

Par ailleurs, le support vertical 130 en forme de plaque est fixé au montant par l'intermédiaire d'une goupille 140 qui traverse la plaque 130 et le montant vertical 38. Une extrémité 142 de la goupille 140, tournée vers l'intérieur du rack 14, porte un loquet 144 pivotant d'axe transversal qui est escamotable dans une rainure 146 de la goupille, et l'extrémité opposée 148 de la goupille 140 porte une came 150 pivotante d'axe transversal qui est susceptible de prendre appui sur le montant 38 vertical pour arc-bouter le loquet 144 sur le support 130 en forme de plaque et assurer ainsi le serrage du support 130 sur le montant 38. De la sorte, un desserrage de la came 150 suivi d'une rotation de la goupille 140 permettent de faire retomber le loquet 144 dans la rainure 146, puis de retirer la goupille 140 du montant 38 et de la plaque 130, ce qui permet de réaliser un démontage simple de la plaque 130 portant le moteur 132 et les galets 136, 138.

Dans le mode de réalisation préféré de l'invention, la plaque 130 reçoit dans un alésage 133 un palier 131 intermédiaire dans lequel est reçu la goupille 140. Cette configuration permet d'articuler le support vertical 130 en rotation autour de la goupille 130, et , dans cette configuration, le poids du moteur 132 permet à lui seul d'assurer le contact du deuxième galet 138 avec le tapis 30. Avantageusement, cette configuration permet aussi de rattraper l'usure du deuxième galet 138 au cours de la vie de l'automate 10.

Indépendamment du rack 14, l'automate 10 peut comporter d'autres éléments modulaires qui permettent différents arrangements propres à une installation adaptée aux besoins de stockage et de convoyage des produits 12.

A cet effet, comme l'illustre la figure 1, le convoyeur 28 peut comporter au moins deux modules 160 amont et 162 aval d'articulation, de structure tubulaire sensiblement parallélépipédique compatible avec un rack 14 de stockage, qui forment un angle "α" déterminé et qui sont jointifs par un montant 165 vertical commun. Le module amont 160 comporte un tapis 164 roulant horizontal amont motorisé dont l'extrémité 166 de jonction surplombe l'extrémité 168 de jonction d'un tapis 170 roulant aval motorisé du module aval 162 qui est incliné de manière que son extrémité opposée 172 soit sensiblement au niveau du tapis roulant 164 amont.

Le convoyeur 28 peut comporter aussi au moins deux modules amont 174 et aval 176 d'embranchement, de structure tubulaire sensiblement parallélépipédique compatible avec un rack de stockage, le module amont 174 comportant un tapis roulant 178 motorisé débouchant sensiblement perpendiculairement au milieu d'un tapis roulant 180 motorisé du module aval 176 qui est susceptible d'orienter sélectivement les produits dans deux directions "'D1" et "D2" opposées.

Le convoyeur 28 peut comporter aussi au moins un module 182 d'ascension, de structure tubulaire sensiblement parallélépipédique compatible avec un rack de stockage, qui comporte deux tapis roulants 184, 186 superposés inclinés dont les rouleaux superposés 188, 190 tournent en sens inverse l'un de l'autre. Comme l'illustre plus particulièrement la figure 10, le tapis roulant inférieur 186 comporte à intervalles réguliers des bandes de tissu 192 adhérent d'orientation parallèle au rouleaux 190 et le tapis roulant supérieur 184 comportant des volets 194 de tissu qui pendent au contact du tapis roulant inférieur 186 pour entraîner les produits entre les deux tapis 184, 186 roulants. Avantageusement, les volets 194 de tissu sont cousus sur le tapis 184 roulant supérieur sensiblement sous la forme d'aubes formant une concavité centrale 191 qui permet de centrer les produits 12 sur le tapis inférieur 186 lors de leur ascension.

Les moyens électroniques des canaux, les moteurs des tapis roulants de chaque module d'ascension, d'articulation, et d'embranchement sont commandés par des moyens de réception infrarouge en réponse à des ordres émis par des moyens d'émission infrarouge commandés par une unité centrale de gestion de l'automate.

Enfin, les moyens électroniques des canaux 16, les moteurs des tapis roulants de chaque module d'ascension 182, d'articulation 160, 162, et d'embranchement 174, 176 sont commandés par des moyens de réception infrarouge, notamment une diode infrarouge 200 associée à chaque canal 16, en réponse à des ordres émis par des moyens d'émission infrarouge commandés par une unité centrale (non représentée) de gestion de l'automate. L'automate ne comporte ainsi aucun câblage apparent, ce qui est un gage de fiabilité et de simplicité d'installation. On remarquer qu'il est possible de prévoir un codage particulier des ordres émis par les moyens d'émission infrarouge, de manière à éviter toute interférence avec des dispositifs étrangers à l'automate 10.

L'automate 10 selon l'invention permet donc d'assurer de manière simple et fiable le stockage, la délivrance et le transport de produits, notamment médicamenteux.

## Revendications

1. Automate (10) de stockage et de transport de produits (12), du type qui comporte au moins un rack (14) de stockage comportant une pluralité de canaux (16) modulaires, qui sont destinés à recevoir les produits (12) à stocker, qui sont inclinés vers le sol entre une face arrière (18) et une face libre avant (20) du rack dans lesquelles ils débouchent respectivement par une entrée (22) et une sortie (24), et qui sont équipés de moyens d'immobilisation/libération qui sont susceptibles d'immobiliser les produits (12) et/ou de leur permettre de glisser le long des canaux (16) puis de choir du rack (14) pour tomber sur un convoyeur (28) qui est destiné à acheminer les produits vers un poste (26)de récupération,
**caractérisé en ce qu'**au moins un module (30) d'acheminement horizontal du convoyeur est agencé sous les canaux (16) dans la base (13) du rack (14) et **en ce que** le rack (14) comporte, à proximité de sa face libre avant (20), une plaque (32) de guidage qui est inclinée vers la base (13) du rack (14) et qui est destinée à guider les produits (12) dans leur chute vers ledit module (30) d'acheminement horizontal du convoyeur (28).

2. Automate (10) de stockage selon la revendication précédente, **caractérisé en ce que** le rack (14) comporte une structure tubulaire sensiblement parallélépipédique délimitée par des montants verticaux (38, 39), **en ce qu'**une partie supérieure (15) du rack (14) comporte au moins des barres (40, 42) transversales de maintien des canaux (16) modulaires qui sont agencées entre les montants (38, 39) verticaux des faces arrière et avant (18, 20) du rack (14), et **en ce qu'**une partie inférieure (13) du rack (14) comporte un tapis roulant formant le module (30) d'acheminement horizontal du convoyeur (28) dont des rouleaux (44) sont agencés entre les montants (38, 39) avant et arrière deux à deux opposés.

3. Automate (10) selon l'une des revendications précédentes, **caractérisé en ce que** chaque canal (16)comporte :
- une gouttière supérieure (48), qui comporte au moins deux ailes (50) verticales d'écartement réglable destinées à s'adapter à différentes tailles de produits (12),
- une platine inférieure (52), comportant les moyens d'immobilisation/libération.

4. Automate (10) selon la revendication précédente, **caractérisé en ce que** les moyens d'immobilisation/libération comportent :
- un moyen d'obstacle (54), qui fait saillie dans la gouttière (48) supérieure à proximité de la sortie (24) du canal (16) et qui est destiné à s'opposer à la descente des produits (12),
- un doigt commandé (56), qui est susceptible de faire saillie au travers d'une ouverture (58) d'une première plaque (50) formant fond de gouttière portée par la platine inférieure (52), qui est agencée immédiatement en amont du moyen d'obstacle (54), pour soulever le produit (12) et lui permettre de franchir le moyen d'obstacle (54).

5. Automate (10) selon la revendication précédente, **caractérisé en ce qu'**un mécanisme (62) d'actionnement du doigt (56) commandé est porté par une deuxième plaque (64) qui est portée par la platine inférieure (52) et qui est agencée sous la première plaque (50), et **en ce que** le mécanisme (62) comporte :
- un bras inférieur (66), qui traverse la deuxième plaque (64), qui est articulé à rotation en son milieu (72) sur la deuxième plaque (64) autour d'un axe transversal (T), et dont l'extrémité inférieure (76) est reliée, d'un côté opposé à la sortie du canal, à un élément (78) de traction longitudinale commandé et, du côté de la sortie du canal, à un ressort (80) de rappel fixé à la deuxième plaque (64),
- un bras supérieur (82), dont l'extrémité supérieure (84) comporte le doigt (56), qui est articulé en rotation sensiblement en son milieu (86) à l'extrémité supérieure (88) du bras inférieur (66), et qui est rappelé élastiquement vers le bras inférieur (66) par un ressort (90) de torsion pour permettre à son extrémité inférieure (90) de prendre appui sur le bras inférieur (66) lorsque l'extrémité inférieure (76) du bras inférieur (66) est tirée par l'élément (78) de traction longitudinale à l'opposé de la sortie du canal (16) de manière que le doigt (56) fasse saille hors de l'ouverture (58) de la première plaque (60) et soulève un produit (12) en amont du moyen d'obstacle (54), ou bien pour permettre au bras supérieur (88) de pivoter par rapport au bras inférieur (66) lorsque l'extrémité inférieure (76) du bras inférieur (66) est rappelée par le ressort (80) vers la sortie du canal de manière que le doigt (56) s'escamote sous le produit (12) suivant.

6. Automate (10) selon la revendication précédente, **caractérisé en ce que** la platine (52) est réalisée sous la forme d'un profilé longitudinal présentant sensiblement une section en forme de H dont des bords latéraux (92) comportent intérieurement des rainures longitudinales supérieure (94) et inférieure (96) de réception des première et deuxième plaques (60, 64), et dont une paroi (98) de branche horizontale, agencée verticalement entre les rainures supérieure (94) et inférieure (96), comporte deux rainures (100) longitudinales symétriques destinées à permettre la flexion de la paroi (98) de branche horizontale du profilé pour écarter ses bords latéraux (92) et faciliter l'introduction des première et deuxième plaques (60, 64).

7. Automate (10) selon la revendication précédente, **caractérisé en ce que** les rainures (100) longitudinales de la paroi (98) de branche horizontale du profilé sont destinées à former des glissières pour deux branches (102) longitudinales d'un poussoir (104) dont une extrémité libre (106) fait saillie à l'avant du canal et dont une extrémité (108) d'actionnement recourbée traverse l'ouverture (57) du profilé correspondant à l'ouverture (58) de la première plaque (60) et est agencée en regard de l'extrémité inférieure (76) du bras inférieur (66) pour permettre de le faire basculer manuellement, les branches (102) longitudinales du poussoir étant maintenues dans les glissières (100) par au moins deux tiges (109) qui traversent transversalement le profilé et qui plaquent lesdites branches (102) longitudinales dans les rainures (100) longitudinales.

8. Automate (10) selon l'une des revendications 6 ou 7, **caractérisé en ce que** le moyen d'obstacle (54) comporte des crochets (110) dont des extrémités supérieures (112) font saillie dans la gouttière (48) et dont des extrémités inférieures sont fixées dans des rainures (113) verticales des bords latéraux (92) du profilé.

9. Automate (10) selon l'une des revendications 5 à 8, **caractérisé en ce que** l'élément (78) de traction longitudinale commandé est constitué d'un fil thermorétractable dont une extrémité (79) est attachée à la deuxième plaque (64), dont l'extrémité opposée (81) est attachée à l'extrémité inférieure (76) du bras inférieur, et qui est susceptible de se raccourcir lorsqu'il est parcouru par un courant électrique dont l'établissement est commandé des moyens électroniques agencés sur la deuxième plaque (64).

10. Automate (10) selon la revendication précédente, **caractérisé en ce que** les moyens électroniques comportent au moins un capteur de présence de produit agencé en amont des moyen d'obstacle, un capteur d'entrée de produit agencé en amont du canal, un capteur de sortie du produit agencé en aval du canal, et **en ce que** les capteurs d'entrée et de sortie sont reliés à un dispositif de comptage par différence destiné à déterminer le stock de produits (12) présents dans le canal (16).

11. Automate (10) selon l'une quelconque des revendications 6 à 10 prises en combinaison avec la revendication 2, **caractérisé en ce que** le profilé comporte une paire avant d'encoches (114) en forme de U inversé pour permettre la fixation du profilé sur les barres transversales avant (42) de maintien du rack et comporte une paire arrière d'encoches (116) en forme de U couché pour permettre la fixation du profilé sur les barres transversales arrière (40) de maintien du rack.

12. Automate (10) selon la revendication précédente prise en combinaison avec la revendication 9, **caractérisé en ce que** la deuxième plaque (64) comporte une pince (118) d'alimentation électrique, alignée transversalement avec la paire avant d'encoches (114), qui est destinée à s'emboîter sur la barre avant (42) transversale du rack (14) qui est réalisée en un matériau conducteur métallique, pour permettre l'alimentation électrique des moyens électroniques.

13. Automate (10) selon l'une des revendications 4 à 10, **caractérisé en ce que** la gouttière (48) comporte deux profilés (120) en vis à vis présentant chacun en section la forme d'un "L" de concavité tourné vers l'axe médian de la gouttière (48), les branches verticales des profilés (120) formant les ailes (50) de la gouttière (48), et chaque branche horizontale (122) d'un profilé (120) étant articulée sur la première plaque (60) par l'intermédiaire d'une structure de parallélogramme horizontale déformable, et **en ce que** les mouvements de deux structures de parallélogramme horizontales déformables opposées sont synchronisées pour permettre un écartement simultané des ailes (50) de la gouttière (48) symétriquement par rapport à l'axe médian de la gouttière (48).

14. Automate (10) selon l'une quelconque des revendications 2 à 13, **caractérisé en ce que** qu'au moins un montant vertical (38) de la partie inférieure (13) du rack (14) porte un support vertical (130) en forme de plaque sur lequel est fixé un moteur (132) dont un axe (134) porteur d'un premier galet (136), traversant la plaque (130), entraîne un deuxième galet (138)qui est monté à rotation sur la plaque (130) et qui est en appui sur le tapis roulant (30) assurer son entraînement.

15. Automate (10) selon la revendication précédente, **caractérisé en ce que** le support vertical (130) en forme de plaque est fixé au montant (38) par l'intermédiaire d'une goupille (140) qui traverse la plaque (38) et le montant vertical (130), dont une extrémité (142) tournée vers l'intérieur du rack (14) porte un loquet (144) pivotant d'axe transversal escamotable dans une rainure (146) de la goupille (140), et dont l'extrémité (148) opposée porte une came (150) pivotante d'axe transversal qui est susceptible de prendre appui sur le montant vertical (38) pour arc-bouter le loquet (144) sur le support (130) en forme de plaque et assurer ainsi le serrage du support (130) sur le montant (38).

16. Automate (10) selon l'une quelconque des revendications précédentes, **caractérisé en ce que** le convoyeur (28) comporte au moins un module (182) d'ascension, de structure tubulaire sensiblement parallélépipédique compatible avec un rack (14) de stockage, qui comporte deux tapis roulants (184, 186) superposés inclinés dont les rouleaux (188, 190) superposés tournent en sens inverse l'un de l'autre, le tapis roulant inférieur (186) comportant à intervalles réguliers des bandes (192) de tissu adhérent d'orientation parallèle au rouleaux (188) et le tapis roulant supérieur (184) comportant des volets (194) de tissu qui pendent au contact du tapis roulant inférieur (186) pour entraîner les produits (12) entre les deux tapis roulants (184, 186).

17. Automate (10) selon la revendication précédente, **caractérisé en ce que** les volets (194) de tissu sont cousus sur le tapis roulant supérieur (186) sensiblement sous la forme d'aubes.

18. Automate (10) selon l'une quelconque des revendications 2 à 17, **caractérisé en ce que** le convoyeur (28) comporte au moins deux modules amont (160) et aval (162) d'articulation, de structure tubulaire sensiblement parallélépipédique compatible avec un rack (14) de stockage, qui forment un angle (α) déterminé et sont jointifs par un montant (165) vertical commun, et **en ce que** le module amont (160) comporte un tapis roulant (164) horizontal amont motorisé dont l'extrémité (166) de jonction surplombe l'extrémité (168) de jonction d'un tapis roulant aval (170) motorisé du module aval (162) qui est incliné de manière que son extrémité opposée (172) soit sensiblement au niveau du tapis roulant amont (164).

19. Automate (10) selon l'une quelconque des revendications 2 à 18, **caractérisé en ce que** le convoyeur (28) comporte au moins deux modules amont (174) et aval (176) d'embranchement, de structure tubulaire sensiblement parallélépipédique compatible avec un rack (14) de stockage, le module amont (174) comportant un tapis roulant motorisé (178) débouchant sensiblement perpendiculairement au milieu d'un tapis roulant motorisé (180) du module aval (176) qui est susceptible d'orienter sélectivement les produits (12) dans deux directions (D1, D2) opposées.

20. Automate (10) selon les revendications 10 et 14 à 19 prises en combinaison, **caractérisé en ce que** les moyens électroniques des canaux (16), les moteurs des tapis roulants de chaque module d'ascension (182), d'articulation (160, 162), et d'embranchement (174, 176) sont commandés par des moyens de réception infrarouge en réponse à des ordres émis par des moyens d'émission infrarouge commandés par une unité centrale de gestion de l'automate (10).

## Patentansprüche

1. Automat (10) zum Lagern und Transportieren von Produkten (12), der mindestens ein Gestell (14) zum Lagern besitzt, das eine Vielzahl von bausteinartigen Kanälen (16) aufweist, welche die zu lagernden Produkte (12) aufnehmen sollen, wobei die Kanäle zwischen einer Rückseite (18) und einer freien Vorderseite (20) des Gestells, in die sie jeweils durch einen Eintritt (22) und einen Austritt (24) münden, in Richtung Boden geneigt sind, und die mit Verriegelungselementen / Freigabeelementen ausgestattet sind, welche die Produkte (12) festsetzen können und / oder es ihnen ermöglichen können, den Kanälen (16) entlang zu gleiten, und anschließend aus dem Gestell (14) heraus auf eine Fördereinrichtung (28) zu fallen, die dazu dient, die Produkte in Richtung einer Sammelstation (26) weiterzuleiten, **dadurch gekennzeichnet, dass** mindestens ein horizontales Weiterleitungsmodul (30) der Fördereinrichtung unter den Kanälen (16) im Boden (13) des Gestells (14) angeordnet ist, und dass das Gestell (14) in unmittelbarer Nähe seiner freien Vorderseite (20) eine Führungsplatte (32) besitzt, die in Richtung Boden (13) des Gestells (14) geneigt ist, und die dazu dient, die Produkte (12) beim Herabfallen in die Richtung des horizontalen Weiterleitungsmoduls (30) der Fördereinrichtung (28) zu lenken.

2. Automat (10) zum Lagern nach dem vorhergehenden Anspruch, **dadurch gekennzeichnet, dass** das Gestell (14) eine im wesentlichen quaderförmige Röhrenkonstruktion aufweist, die durch vertikale Pfosten (38, 39) begrenzt wird, dass eine Oberseite (15) des Gestells (14) mindestens querverlaufende Haltestäbe (40, 42) für die bausteinartigen Kanäle (16) besitzt, welche zwischen den vertikalen Pfosten (38, 39) der Rückseite und der Vorderseite (18, 20) des Gestells (14) angeordnet sind, und dass eine Unterseite (13) des Gestells (14) ein Förderband bzw. Transportband besitzt, welches das horizontale Weiterleitungsmodul (30) für die Fördereinrichtung (28) darstellt, deren Rollen (44) zwischen den Pfosten (38, 39) vorn und hinten paarweise einander gegenüberliegend angeordnet sind.

3. Automat (10) nach einem der vorhergehenden Ansprüche, **dadurch gekennzeichnet, dass** jeder Kanal (16) folgendes besitzt :
- eine obere Rinne (48), die mindestens zwei vertikale Schenkel (50) mit verstellbarem Abstand besitzt, um sie auf die unterschiedlichen Größen der Produkte (12) einstellen zu können,
- eine untere Platte (52), welche die Verriegelungselemente / Freigabeelemente aufweist.

4. Automat (10) nach dem vorhergehenden Anspruch, **dadurch gekennzeichnet, dass** die Verriegelungselemente / Freigabeelemente folgendes besitzen :
- ein Hinderniselement (54), das in der oberen Rinne (48) in unmittelbarer Nähe des Austritts (24) des Kanals (16) hervorsteht, und das ein Herunterfallen der Produkte (12) verhindern soll,
- einen Steuerzapfen (56), der durch eine Öffnung (58) einer ersten Platte (50), welche den Boden der Rinne bildet, die von der unteren Platte (52) getragen wird, welche unmittelbar vor dem Hinderniselement (54) angeordnet ist, hervortreten kann, um das Produkt (12) anzuheben und es ihm zu ermöglichen, das Hinderniselement (54) zu überwinden.

5. Automat (10) nach dem vorhergehenden Anspruch, **dadurch gekennzeichnet, dass** ein Betätigungsmechanismus (62) für den Steuerzapfen (56) von einer zweiten Platte (64) aufgenommen wird, welche von der unteren Platte (52) getragen wird, die unter der ersten Platte (50) angeordnet ist, und dass dieser Mechanismus (62) folgendes besitzt :
- einen unteren Arm (66), der über der zweiten Platte (64) verläuft, und der in seiner Mitte (72) an der zweiten Platte (64) um eine Querachse (T) herum drehend gelagert ist, und dessen unteres Ende (76) auf der dem Austritt des Kanals gegenüberliegenden Seite mit einem betätigten, längs verlaufenden Zugelement (78), und auf der Austrittsseite des Kanals mit einer Rückholfeder (80) verbunden ist, die an der zweiten Platte (64) befestigt ist,
- einen oberen Arm (82), dessen oberes Ende (84) den Zapfen (56) aufweist, der im wesentlichen in seiner Mitte (86) am oberen Ende (88) des unteren Armes (66) drehend gelagert ist, und der durch eine Torsionsfeder (90) in Richtung des unteren Armes (66) elastisch zurückgeholt wird, so dass er sich an seinem unteren Ende (90) auf den unteren Arm (66) abstützen kann, wenn das untere Ende (76) des unteren Armes (66) von dem längs verlaufenden Zugelement (78) an die Stelle gegenüber dem Austritt des Kanals (16) gezogen wird, so dass der Zapfen (56) aus der Öffnung (58) der ersten Platte (60) hervortritt, und ein Produkt (12) vor dem Hinderniselement (54) hochhebt, oder damit sich der obere Arm (88) gegenüber dem unteren Arm (66) drehen kann, wenn das untere Ende (76) des unteren Armes (66) durch die Feder (80) in Richtung Austritt des Kanals zurückgeholt wird, so dass der Zapfen (56) unter dem nachfolgenden Produkt (12) verschwindet.

6. Automat (10) nach dem vorhergehenden Anspruch, **dadurch gekennzeichnet, dass** die Platte (52) in Form eines Längsprofils hergestellt wird, das im wesentlichen einen Querschnitt in Form eines H besitzt, dessen Seitenkanten (92) in ihrem Innern oben und unten Längsrillen (94) zur Aufnahme der ersten und zweiten Platte (60, 64) besitzen, von denen eine Wand (98) des horizontalen Abschnittes, die vertikal zwischen der oberen (94) und der unteren (96) Rille angeordnet ist, zwei symmetrische Längsrillen (100) besitzt, welche die Durchfederung der Wand (98) des horizontalen Abschnittes des Profils ermöglichen sollen, so dass ihre Seitenkanten (92) beabstandet sind und das Einführen der ersten und zweiten Platte (60, 64) erleichtert wird.

7. Automat (10) nach dem vorhergehenden Anspruch, **dadurch gekennzeichnet, dass** die Längsrillen (100) der Wand (98) des horizontalen Abschnittes des Profils Führungsschienen für zwei Längsschenkel (102) einer Strebe (104) bilden sollen, deren freies Ende (106) vor dem Kanal hervorsteht und deren gekrümmtes Betätigungsende (108) die Öffnung (57) des Profils passiert, welche der Öffnung (58) der ersten Platte (60) entspricht, und gegenüber dem unteren Ende (76) des unteren Armes (66) angeordnet ist, so dass man es manuell kippen kann, wobei die Längsschenkel (102) der Strebe durch mindestens zwei Stäbe (109) in den Führungsschienen (100) gehalten werden, und die Stäbe quer durch das Profil hindurch verlaufen und die Längsschenkel (102) in die Längsrillen (100) drücken.

8. Automat (10) nach einem der Ansprüche 6 oder 7, **dadurch gekennzeichnet, dass** es sich bei dem Hinderniselement (54) um Haken (110) handelt, deren obere Enden (112) aus der Rinne (48) hervorstehen und deren untere Enden in den vertikalen Rillen (113) der Seitenkanten (92) des Profils befestigt sind.

9. Automat (10) nach einem der Ansprüche 5 bis 8, **dadurch gekennzeichnet, dass** das betätigte, längsverlaufende Zugelement (78) aus einem Wärmeschrumpfungsdraht besteht, dessen Ende (79) mit der zweiten Platte (64) verbunden ist und dessen gegenüberliegendes Ende (81) mit dem unteren Ende (76) des unteren Armes verbunden ist, und der sich verkürzen kann, wenn elektrischer Strom durch ihn hindurchfließt, was durch elektronische Einrichtungen gesteuert wird, die an der zweiten Platte (64) angeordnet sind.

10. Automat (10) nach dem vorhergehenden Anspruch, **dadurch gekennzeichnet, dass** die elektronischen Einrichtungen mindestens einen Sensor für das Vorhandensein eines Produktes besitzen, der vor dem Hinderniselement angeordnet ist, einen Sensor vor dem Eintritt des Produktes besitzen, der vor dem Kanal angeordnet ist, einen Sensor für den Austritt des Produktes besitzen, der hinter dem Kanal angeordnet ist, und dass die Sensoren für den Eintritt und den Austritt mit einer Differenz-Zählvorrichtung verbunden sind, um den Vorrat an Produkten (12) in dem Kanal (16) zu bestimmen.

11. Automat (10) nach einem der Ansprüche 6 bis 10 in Verbindung mit Anspruch 2, **dadurch gekennzeichnet, dass** das Profil vorne ein Paar Einkerbungen (114) in Form eines umgekehrten U besitzt, so dass das Profil an den vorderen, querverlaufenden Haltestäben des Gestells befestigt werden kann, und hinten ein Paar Einkerbungen (116) in Form eines "liegenden" U besitzt, so dass das Profil an den hinteren, querverlaufenden Haltestäben (40) des Gestells befestigt werden kann.

12. Automat (10) nach dem vorhergehenden Anspruch in Verbindung mit Anspruch 9, **dadurch gekennzeichnet, dass** die zweite Platte (64) eine Stromklemme (118) besitzt, die quer zu dem vorderen Paar Einkerbungen (114) ausgerichtet ist und auf den vorderen Querstab (42) des Gestells (14), der aus einem leitenden Metall hergestellt ist, aufgesteckt wird, um die Stromversorgung der elektronischen Einrichtungen zu ermöglichen.

13. Automat (10) nach einem der Ansprüche 4 bis 10, **dadurch gekennzeichnet, dass** die Rinne (48) zwei einander gegenüberliegende Profile (120) besitzt, die in Richtung Mittelachse der Rinne (48) jeweils einen konkaven, L-förmigen Querschnitt besitzen, wobei die vertikalen Abschnitte der Profile (120) die Schenkel (50) der Rinne (48) bilden, und jeder horizontale Abschnitt (122) eines Profils (120) mittels einer verformbaren, horizontalen Parallelogrammkonstruktion an der ersten Platte (60) angelenkt ist, und dass die Bewegungen der beiden einander gegenüberliegenden, verformbaren, horizontalen Parallelogrammkonstruktionen synchronisiert sind, um einen gleichzeitigen symmetrischen Abstand der Schenkel (50) der Rinne (48) zu der Mittelachse der Rinne (48) zu ermöglichen.

14. Automat (10) nach einem der Ansprüche 2 bis 13, **dadurch gekennzeichnet, dass** mindestens ein vertikaler Pfosten (38) des unteren Teils (13) des Gestells (14) eine vertikale Abstützung (130) in Form einer Platte besitzt, an der ein Motor (132) befestigt ist, dessen Achse (134) eine erste Rolle (136) aufnimmt, die über die Platte (130) führt, und eine zweite Rolle (138) antreibt, welche drehend an der Platte (130) montiert ist, und auf dem Förderband bzw. Transportband (30) aufliegt und für seinen Antrieb sorgt.

15. Automat (10) nach dem vorhergehenden Anspruch, **dadurch gekennzeichnet, dass** die vertikale Abstützung (130) in Form einer Platte mittels eines Stiftes (140) an dem Pfosten (38) befestigt ist, wobei der Stift (140) über die Platte (38) und den vertikalen Pfosten (130) verläuft, dessen, in Richtung Gestell-Inneres (14) gerichtetes, Ende (142) einen kippbaren Fallriegel (144) mit Querachse aufnimmt, der in einer Rille (146) des Stiftes (140) versenkt werden kann, und dessen gegenüberliegendes Ende (148) einen kippbaren Nocken (150) mit Querachse aufnimmt, der sich auf dem vertikalen Pfosten (38) abstützen kann, um den Fallriegel (144) an der Abstützung (130) in Form einer Platte abzusteifen und so sicherzustellen, dass die Abstützung (130) fest mit dem Pfosten (38) verbunden ist.

16. Automat (10) nach einem der vorhergehenden Ansprüche, **dadurch gekennzeichnet, dass** die Fördereinrichtung (28) mindestens ein im wesentlichen quaderförmiges, röhrenförmiges Steigmodul (182) besitzt, das zu dem Lagerungs-Gestell (14) kompatibel ist, welches zwei Förderbänder bzw. Transportbänder (184, 186) besitzt, die schräg übereinander gelagert sind, und deren übereinander gelagerte Rollen (188, 190) sich jeweils in entgegengesetzter Richtung drehen, wobei das untere Förderband bzw. Transportband (186) in regelmäßigen Abständen parallel zu den Rollen (188) ausgerichtete, haftende Gewebebänder (192) besitzt, und das obere Förderband bzw. Transportband (184) Gewebeklappen (194) besitzt, die mit dem unteren Förderband bzw. Transportband (186) in Berührung stehen, um die Produkte (12) zwischen den beiden Förderbändern bzw. Transportbändern (184, 186) mitzuführen.

17. Automat (10) nach dem vorhergehenden Anspruch, **dadurch gekennzeichnet, dass** die Gewebeklappen (194) im wesentlichen in Form von Schaufeln an dem oberen Förderband bzw. Transportband (186) angeheftet sind.

18. Automat (10) nach einem der Ansprüche 2 bis 17, **dadurch gekennzeichnet, dass** die Fördereinrichtung (28) vorn (160) und hinten (162) mindestens zwei, im wesentlichen quaderförmige, röhrenförmige Gelenkmodule besitzt, die mit einem Lagerungs-Gestell (14) kompatibel sind, und einen bestimmten Winkel (α) bilden und durch einen gemeinsamen, vertikalen Pfosten (165) zusammengefügt sind, und dass das vordere Modul (160) ein horizontales, vorgelagertes Förderband bzw. Transportband (164) mit Motorantrieb besitzt, dessen Verbindungsende (166) über das Verbindungsende (168) des motorisierten, nachgeordneten Förderbandes bzw. Transportbandes (170) des nachgeordneten Moduls (162) hinüberragt, welches derart geneigt ist, dass sein gegenüberliegendes Ende (172) im wesentlichen auf gleicher Höhe mit dem vorgelagerten Förderband bzw. Transportband (164) liegt.

19. Automat (10) nach einem der vorhergehenden Ansprüche 2 bis 18, **dadurch gekennzeichnet, dass** die Fördereinrichtung (28) mindestens zwei im wesentlichen quaderförmige, röhrenförmige Anschlussmodule vorn (174) und hinten (176) besitzt, die mit einem Lagerungs-Gestell (14) kompatibel sind, wobei das vorgelagerte Modul (174), das ein motorisiertes Förderband bzw. Transportband (178) besitzt, im wesentlichen senkrecht in die Mitte eines motorisierten Förderbandes bzw. Transportbandes (180) des nachgeordneten Moduls (176) mündet, das die Produkte (12) selektiv in die beiden, einander entgegengesetzten Richtungen (D1, D2) lenken kann.

20. Automat (10) gemäß den Ansprüchen 10 zusammen mit 14 bis 19, **dadurch gekennzeichnet, dass** die elektronischen Einrichtungen der Kanäle (16) und die Motoren der Förderbänder bzw. Transportbänder eines jeden Steigmoduls (182), Gelenkmoduls (160, 162) und Anschlussmoduls (174, 176) durch Infrarot-Empfangsvorrichtungen gesteuert werden, die ihre Befehle von Infrarot-Emissionsvorrichtungen erhalten, welche von einer zentralen Steuereinheit des Automaten (10) gesteuert werden.

## Claims

1. Automatic control system (10) for storing and transporting products (12), of the type that comprises at least one storage rack (14) comprising a plurality of modular channels (16), which receive the products (12) to be stored, are inclined toward the ground between a rear face (18) and a free front face (20) of the rack, in which they open with an inlet (22) and an outlet (24) respectively, and are equipped with immobilisation/release means, capable of immobilising the products (12) and/or allowing them to slide along the channels (16) then to fall from the rack (14) onto a conveyor (28), which forwards the products to a retrieval point (26), **characterised in that** at least one horizontal forwarding module (30) of the conveyor is arranged under the channels (16) in the bottom (13) of the rack (14) and **in that** the rack (14) comprises, close to its free front face (20), a guide plate (32), which is inclined toward the bottom (13) of the rack (14) and guides the products (12) as they fall toward said horizontal forwarding module (30) of the conveyor (28).

2. Automatic control system (10) for storing according to the preceding claim, **characterised in that** the rack (14) comprises a substantially parallelepiped tubular structure delimited by vertical uprights (38, 39), **in that** an upper portion (15) of the rack (14) comprises at least transverse support bars (40, 42) for the modular channels (16) that are arranged between the vertical uprights (38, 39) of the rear and front faces (18, 20) of the rack (14), and **in that** a lower portion (13) of the rack (14) comprises a conveyor belt forming the horizontal forwarding module (30) of the conveyor (28) of which the rolls (44) are arranged between the front and rear uprights (38, 39) opposed in pairs.

3. Automatic control system (10) according to any one of the preceding claims, **characterised in that** each channel (16) comprises:
- an upper trough (48), which comprises at least two vertical wings (50) having an adjustable gap for adapting to products (12) of different sizes;
- a lower panel (52), comprising the immobilisation/release means.

4. Automatic control system (10) according to the preceding claim, **characterised in that** the immobilisation/release means comprise:
- an obstacle (54), which protrudes in the upper trough (48) near the outlet (24) of the channel (16) and blocks the descent of the products (12);
- a controlled finger (56), which protrudes through an opening (58) in a first plate (50) forming the bottom of the trough carried by the lower panel (52), which is arranged immediately upstream of the obstacle (54), for raising the product (12) and allowing it to pass the obstacle (54).

5. Automatic control system (10) according to the preceding claim, **characterised in that** an actuation mechanism (62) for the controlled finger (56) is carried by a second plate (64) which is carried by the lower panel (52) and is arranged under the first plate (50), and **in that** the mechanism (62) comprises:
- a lower arm (66), which passes through the second plate (64), is rotatably mounted about a transverse axis (T) at its centre (72) on the second plate (64) and of which the lower end (76) is connected, on a side remote from the outlet of the channel, to a controlled longitudinal traction element (78) and, on the channel outlet side, to a return spring (80) connected to the second plate (64);
- an upper arm (82) of which the upper end (84) comprises the finger (56), which is rotatably mounted substantially at its centre (86) on the upper end (88) of the lower arm (66) and is resiliently returned toward the lower arm (66) by a torsion spring (90) for allowing its lower end (90) to rest on the lower arm (66) when the lower end (76) of the lower arm (66) is pulled by the longitudinal traction element (78) remote from the outlet of the channel (16) so that the finger (56) protrudes from the opening (58) in the first plate (60) and raises a product (12) upstream of the obstacle (54), or in order to allow the upper arm (88) to pivot relative to the lower arm (66) when the lower end (76) of the lower arm (66) is returned by the spring (80) toward the outlet of the channel so that the finger (56) retracts under the next product (12).

6. Automatic control system (10) according to the preceding claim, **characterised in that** the panel (52) is configured in the shape of a longitudinal profile exhibiting a substantially H-shaped section of which the lateral edges (92) comprise upper (94) and lower (96) longitudinal grooves on the inside for receiving first and second plates (60, 64) and of which a horizontal branch wall (98), arranged perpendicularly between the upper (94) and lower grooves (96), comprises two longitudinal symmetrical grooves (100) allowing the horizontal branch wall (98) of the profile to be flexed in order to spread its lateral edges (92) and facilitate the insertion of the first and second plates (60, 64).

7. Automatic control system (10) according to the preceding claim, **characterised in that** the longitudinal grooves (100) of the horizontal branch wall (98) of the profile form slide rails for two longitudinal branches (102) of a pusher (104) of which one free end (106) protrudes in the front of the channel and of which one curved actuation end (108) passes through the opening (57) in the profile corresponding to the opening (58) in the first plate (60) and is arranged so as to face the lower end (76) of the lower arm (66) in order to rock it manually, the longitudinal branches (102) of the pusher being held in the slide rails (100) by at least two rods (109), which transversely pass through the profile and place said longitudinal branches (102) into the longitudinal grooves (100).

8. Automatic control system (10) according to either claim 6 or claim 7, **characterised in that** the obstacle (54) comprises hooks (110) of which the upper ends (112) protrude in the trough (48) and of which the lower ends are fixed in perpendicular grooves (113) of the lateral edges (92) of the profile.

9. Automatic control system (10) according to any one of claims 5 to 8, **characterised in that** the controlled longitudinal traction element (78) consists of a heat-shrinkable wire of which one end (79) is attached to the second plate (64), of which the opposite end (81) is attached to the lower end (76) of the lower arm, and which is capable of shortening when permeated by electric current, the generation of which is controlled by electronic means arranged on the second plate (64).

10. Automatic control system (10) according to the preceding claim, **characterised in that** the electronic means comprise at least one product presence sensor arranged upstream of the obstacle, a product input sensor arranged upstream of the channel, a product output sensor arranged downstream of the channel, and **in that** the input and output sensing devices are connected to a device that counts by subtraction for determining the stock of products (12) present in the channel (16).

11. Automatic control system (10) according to any one of claims 6 to 12 in combination with claim 2, **characterised in that** the profile comprises a front pair of recesses (114) in the shape of an inverted U for fixing the profile onto the front transverse bars (42) for supporting the rack and comprises a rear pair of recesses (116) in the shape of a recumbent U for fixing the profile onto the rear transverse bars (40) for supporting the rack.

12. Automatic control system (10) according to the preceding claim in combination with claim 9, **characterised in that** the second plate (64) comprises an electrical supply clamp (118), transversely aligned with the front pair of recesses (114), which fits onto the transverse front bar (42) of the rack (14) produced from a conductive metal material to allow the electronic means to be supplied with electricity.

13. Automatic control system (10) according to any one of claims 4 to 10, **characterised in that** the trough (48) comprises two profiles (120) facing each other each having an "L"-shaped section with concavity turned toward the median line of the trough (48), the vertical branches of the profiles (120) forming the wings (50) of the trough (48), and each horizontal branch (122) of a profile (120) being articulated on the first plate (60) by means of a deformable horizontal parallelogram structure, and **in that** the movements of two opposed deformable horizontal parallelogram structures are synchronised for simultaneously spreading the wings (50) of the trough (48) symmetrically about the median line of the trough (48).

14. Automatic control system (10) according to any one of claims 2 to 13, **characterised in that** at least one vertical upright (38) of the lower portion (13) of the rack (14) carries a vertical support (130) in the form of a plate on which is fixed a motor (132), of which a shaft (134) carrying a first roller (136), passing through the plate (130), drives a second roller (138), which is rotatably mounted on the plate (130) and rests on the conveyor belt (30) to effect the actuation thereof.

15. Automatic control system (10) according to the preceding claim, **characterised in that** the vertical support (130) in the form of a plate is fixed to the upright (38) by means of a pin (140), which passes through the plate (38) and the vertical upright (130), of which one end (142) turned toward the interior of the rack (14) carries a pivoting latch (144) having a transverse axis and retractable in a furrow (146) of the pin (140), and of which the opposite end (148) carries a pivoting cam (150) having a transverse axis and resting on the vertical upright (38) for buttressing the latch (144) onto the support (130) in the form of a plate and thus clamping the support (130) on the upright (38).

16. Automatic control system (10) according to any one of the preceding claims, **characterised in that** the conveyor (28) comprises at least one lifting module (182) having a substantially parallelepiped tubular structure compatible with a storage rack (14), which comprises two inclined superimposed conveyor belts (184, 186), of which the superimposed rolls (188, 190) turn in opposite directions to one another, the lower conveyor belt (186) comprising at regular intervals adhesive fabric strips (192) in a parallel orientation to the rolls (188) and the upper conveyor belt (184) comprising fabric flaps (194), which hang in contact with the lower conveyor belt (186) for driving the products (12) between the two conveyor belts (184, 186).

17. Automatic control system (10) according to the preceding claim, **characterised in that** the fabric flaps (194) are sewn on to the upper conveyor belt (186) substantially in the shape of vanes.

18. Automatic control system (10) according to any one of claims 2 to 17, **characterised in that** the conveyor (28) comprises at least one upstream articulation module (160) and at least one downstream articulation module (162) having a substantially parallelepiped tubular structure compatible with a storage rack (14), which form a predetermined angle (α) and are joined by a common vertical upright (165), and **in that** the upstream module (160) comprises a motorised upstream horizontal conveyor belt (164) of which the junction end (166) overhangs the junction end (168) of a motorised downstream conveyor belt (170) of the downstream module (162) which is inclined such that its opposite end (172) is substantially at the same level as the upstream conveyor belt (164).

19. Automatic control system (10) according to any one of claims 2 to 18, **characterised in that** the conveyor (28) comprises at least one upstream connection module (174) and at least one downstream connection module (176) having a substantially parallelepiped tubular structure compatible with a storage rack (14), the upstream module (174) comprising a motorised conveyor belt (178) opening substantially perpendicularly in the centre of a motorised conveyor belt (180) of the downstream module (176) which selectively directs the products (12) in two opposing directions (D1, D2).

20. Automatic control system (10) according to claims 10 and 14 to 19 taken in combination, **characterised in that** the electronic means of the channels (16), the motors of the conveyor belts of each lifting module (182), articulation module (160, 162) and connection module (174, 76) are controlled by infrared receiving means in response to orders emitted by infrared transmission means controlled by a central control unit of the automatic control system (10).
